# EUROPEAN PATENT APPLICATION

(11) **EP 3 862 182 A1**
(43) Date of publication of application: **11.08.2021**
(21) Application number: 20156213.9
(22) Date of filing: 07.02.2020
(51) Int. Cl.: B32B 27/10, B32B 27/08, D21H 19/84, D21H 19/20, B65D 65/40

(54) **DOUBLE SIDED POLYMER COATED PAPER**

(71) Applicant: Danapak Flexibles A/S, 4200 Slagelse (DK)
(72) Inventor: Fogtmann, Torben, 5800 Nyborg (DK); Christensen, Lars, 4200 Slagelse (DK); Johansen, Peter, 5000 Odense C (DK)
(74) Representative: AWA Denmark A/S

(57) **Abstract**

A packaging sheet comprising:
a paper base sheet having a first surface and a second surface, the second surface being positioned oppositely to the first surface;
a first coating on the first surface of the paper base sheet; and
a second coating on the second surface of the paper base sheet;
wherein the first and second coatings can be selected from a range of options.

## Description

The present invention relates to packaging sheets or sheet laminates, more particularly coextrusion coated packaging sheets or coextrusion coated sheet laminates for use, for example, for packaging of pharmaceuticals, tobacco products, and food products.

Prior art packaging sheets or packaging laminates for packaging of foodstuffs, such as confectionary foods, pharmaceuticals, such as liquid pharmaceuticals, and tobacco products, such as cigarette packagings, especially cigarette box inner linings, often include an aluminium (Al) sheet to provide a barrier to oxygen, aromas, vapour, and/or light, e.g. for extending shelf life, preserving aroma, and/or preventing the packaged goods from becoming spoiled.

One example of such a prior art packaging sheet used as cigarette packaging inner lining comprises, in sequence, a 20 µm oriented polypropylene (OPP) sheet, a 9 mm aluminium sheet and a 20 µm OPP sheet, optionally provided with an acrylic coating when lower welding temperatures are desired.

Another example of such a prior art packaging sheet used as cigarette packaging inner lining comprises, in sequence, a polymer layer extrusion coated on an aluminium sheet, a paper layer extrusion laminated to the aluminium sheet, and a polymer contact layer extrusion coated on the paper sheet.

Another example of such a prior art packaging sheet comprises, in sequence, of a polymer layer extrusion coated on an aluminium or polyethylene terephthalate sheet (PET), a paper sheet extrusion laminated to the aluminium or PET sheet, and a polymer contact layer extrusion coated on the paper sheet.

Some confectionary foods are in the prior art packaged in twist packagings comprising such a prior art packaging sheet. One example of such a prior art packaging sheet comprises a paper base sheet with a PVDC lacquer layer on one surface and a barrier wax on the other surface.

On this background, the present disclosure seeks to provide packaging sheets and methods for manufacture thereof, wherein the packaging sheets may be more suitable for being recycled while sufficiently maintaining one or more properties making the packaging sheets suitable for packaging of confectionary foods and/or pharmaceuticals, and/or tobacco products. Such properties may include one or more of low self-friction, suitably low gas barrier, suitably low water vapour transmission rate (WVRT), inertness towards the packaged goods, suitably high fat/oil resistance or barrier, suitably low amount of curling, and suitable foldability and deadfold properties.

One or more of these and/or further objects may be achievable according to a first aspect of the present invention which involves a packaging sheet according to claim 1 and/or according to one or more of the claims dependent therefrom.

Such packaging sheets, which may generally alternatively be denoted packaging laminates, may be suitable for being recycled, especially as paper, e.g. for manufacture of new paper materials, since the relative amount of paper to other materials, especially metal, especially aluminium, in such packaging sheets can be made low.

Furthermore, experiments have shown that such packaging sheets may be manufactured with a low self-friction, which may make the packaging sheets suitable for packaging of goods in high-speed packaging machines. In addition, a satisfactorily small curl and/or sufficient foldability properties and/or sufficient deadfold properties of the packaging sheets may be achievable, allowing for satisfactory runability on packaging machines. Foldability and deadfold properties achieved with such packaging sheets may be similar or identical to those properties of prior art packaging sheets for packaging of tobacco products and/or pharmaceuticals and/or confectionary foods.

Furthermore, experiments have shown that such packaging sheets may be manufactured with a low seal initial temperature (SIT) for the contact layer, such that a high tear strength of a sealing or welding may be obtained at low sealing or welding temperatures. This may allow a packaging comprising the packaging sheet to be completed in less time since heating the packaging sheet or the contact layer to its SIT may require a smaller change in temperature. Also, lower sealing temperatures may maintain desired properties of other layers of the packaging sheet.

In addition, experiments have shown that such packaging sheets can be manufactured with a satisfactory barrier to water vapour, such that the packaging sheets may be suitable for storage of e.g. tobacco products, pharmaceuticals, and/or confectionary foods. Additionally, barriers created by the packaging sheet may also lead to low or no exchange of oxygen between the surrounding environment and an inside of the package.

Such packaging sheets may also be especially suitable for long term storage of e.g. tobacco products since they may provide low or no exchange of aromas between the surrounding environment and the inside of the package.

A contact layer or contact surface of such packaging sheets may have a suitable inertness towards active pharmaceutical ingredients.

Such packaging sheets may be manufactured with a high degree of resistance towards chemical and/or structural breakdown caused by water, alcohols or solutions thereof.

Such packaging sheets may be manufactured with a contact layer or contact surface with a low amount of extractables such that the packaging sheet may have a smaller or minimal impact on the composition of the packaged goods.

Such packaging sheets may be suitable for packaging of confectionary foods with a content of fats and/or oils. Accordingly, the packaging sheets may have a high or a suitably high fats and/or oil resistance.

Such packaging sheets may be manufactured with a suitably low amount of curl, potentially making the packaging sheets suitable for being packaged in a packaging machine, especially in a high-speed packaging machine.

Such packaging sheets may be manufactured to have suitable deadfold properties, allowing the packaging sheets to be used in a range of packaging methods, such as twist packaging and cigarette packaging inner linings.

In this disclosure, the term "coated directly on", in terms of a coating being coated on a sheet, may generally involve that substantially no further layers or sheets or coatings or substantially no further material is present between the coating and the sheet.

The term "loading" as used in the present disclosure may alternatively be denoted "grammage" and is expressed in g/m² (mass per unit area) and is a measure of the areal density of sheets or layers or coatings in a packaging sheet. The term "total loading" is intended to mean the accumulated loading of two or more layers. For example, two layers each having a loading of 1 g/m² will have a total loading of 2 g/m². The loading may be a dry weight loading or a wet weight loading.

In the present disclosure, a "sheet" may generally be separately manufactured and/or pre-manufactured and/or self-supporting and may comprise one or more sheets and/or one or more layers and/or one or more coatings. "Self-supporting" may involve that the sheet substantially maintains its shape if existing freely or without further layers or sheets being attached to it.

A "layer" and/or a "coating" may be a layer and/or a coating, respectively, of a sheet and may accordingly not be separately manufactured and/or pre-manufactured and/or self-supporting. Especially, layers of extrusion coatings and/or coextrusion coatings and/or other coatings may not be separately manufactured and/or pre-manufactured and/or self-supporting.

An outer layer, which may be an exposed outer layer and/or an outermost layer and/or a surface layer, of the second coating may be a contact layer for facing or coming into contact with a product to be packaged. Such an outer layer of the first coating may be for forming an outwardly facing surface of the packaging sheet when the packaging sheet forms part of a packaging. The outer layers or surface layers of the first and second coatings may be positioned oppositely from each other and/or may establish a first and second outer surfaces, respectively, of the packaging sheet. Layers of coextrusion coatings not being outer layers may be coextrusion coating tie layers.

An outer layer of the first coating and/or the second coating may comprise an EVOH or may substantially consist of an EVOH.

In the context of the present disclosure, the seal initial temperature (SIT) is indicated as ± 5°C, for a welding period of 0.3 s, and a pressure of 0.5 N/mm².

An outer layer of the first and/or second coating may be weldable to itself, and/or outer layers of the first and/or second coatings may be weldable to each other. Such an outer layer may have a seal initial temperature (SIT) in a range of 65-180, 70-170, 75-160, 80-150, 80-140, 85-130, 85-125, 85-120, 85-115, 85-110, 85-105, 85-100, or 85-95°C. A welding with a satisfactory strength against delamination may be obtained by subjecting the outer layer(s) to a welding pressure of pressure of 0.5 N/mm² while heating the outer layer(s) to a temperature in one of the above ranges of temperatures for a period of time in a range of 0.1-5, 0.1-4, 0.1-3, 0.1-2, 0.1-1, 0.2-0.8, or 0.3-0.6 seconds or for 0.1, 0.3, 0.5, or 1 seconds.

In the context of the present disclosure, a static coefficient of friction (COFₛ) and a dynamic coefficient of friction (COF_{d}) are measured according to ASTM D 1894. An outer layer of the first and/or second coating may, if abutting itself, have a COFₛ of less than 0.15, 0.20, 0.25, 0.30, 0.35, 0.40, 0.45, 0.50, 0.55, 0.60, 0.70, or 0.80. An outer layer of the first and/or second coating may, if abutting itself, have a COF_{d} of less than 0.10, 0.15, 0.20, 0.25, 0.30, 0.35, 0.40, 0.45, 0.50, 0.55, 0.60, 0.70, or 0.80.

The packaging sheet of the present disclosure may have a water vapour transmission rate (WVTR) of less than 40, 35, 30, 25, 20, 15, 10, 5, 2.5, 1, or 0.5 g/m²/day according to ASTM standard F1249 at 38°C and 90% relative humidity.

Packages according to the present disclosure may comprise confectionary foods. Confectionary foods may include one or more of chocolates, toffees, candies, jellies, biscuits, and/or caramels.

In the packaging sheets of the present disclosure, coatings comprising one or more layer(s) may have been extrusion coated or coextrusion coated onto the paper base sheet. In such packaging sheets, the coatings may adhere to the paper base sheet without a separate adhesive layer or glue layer being provided between them. Accordingly, no separate adhesive layer or glue layer that includes a hardener or a hardening agent or hardening component, will usually be present between the coating and the paper base sheet. An adhesive layer or glue layer that includes a hardener or a hardening agent or hardening component may be defined as a layer that comprises or essentially consists of a two-component adhesive or a two-component glue, such as a polyurethane (PU) based adhesive or glue, available from, for example, Henkel AG, Coim Spa, or Dow Chemical. Alternatively, it can be determined from a packaging sheet if the coating(s) have been extrusion coated or coextrusion coated onto the paper base sheet since in that case the packaging sheet will curl less compared to if it were manufactured using a glue or adhesive layer.

The paper base sheet comprises at least one paper sheet and may comprise one or more further layers, such as an extrusion coating primer and/or a metallization. The paper base sheet may not comprise any extrusion coated or coextrusion coated or extrusion laminated layers.

One or more extrusion coating primers may form part of the paper base sheet, potentially as one or more primer layers or coatings. Such a primer layer may establish or include the first and or the second surface of the paper base sheet. The primer layer(s) may be applied on, potentially directly on, the paper of the paper sheet before the first and/or second coatings are coated on the paper base sheet.

The extrusion coating primer may improve adhesion between the paper sheet and the first and/or second coatings extrusion coated or coextrusion coated on the paper base sheet. The extrusion coating primer layer may have a loading of less than 1, 0.5, 0.3, 0.2, 0.1, or 0.05 g/m² and/or may comprise or substantially consist of a polyethylene imine, an ethylene acrylic acid, and/or a polypropylene (PP) based primer.

The paper base sheet may comprise one or more further paper sheets in which case the paper sheets may be adhered or laminated to each other, e.g. using a glue or adhesive.

The paper base sheet may comprise a metallization of or on the paper sheet or the paper thereof. The metallization may be provided on, potentially directly on, the paper of the paper sheet. A metallization may include a primer facing the paper of the paper sheet, followed by a metal layer, followed by a lacquer layer. The metall layer may include a metal, such as Al. A thickness of the metal layer may be very small, such as less than 1 um, especially in the nm range. A loading of the metallization may be less than or equal to 5, 4, or 3 g/m² and/or higher than or equal to 1, 2, or 3 g/m².

The paper base sheet may comprise a ceramic coating and/or a clay coating of or on the paper sheet.

The paper base sheet may comprise a print or colour layer.

The primer layer may be provided on the clay coating and/or on the ceramic coating and/or on the metallization and/or on the print or colour layer and/or directly on the paper of the paper sheet.

In some embodiments, the paper base sheet does not comprise any further sheets and/or layers and/or coatings and/or materials besides the paper sheet and potentially one or more further paper sheets and/or an extrusion coating primer and/or a metallization of or on the paper sheet and/or a ceramic coating of or on the paper sheet and/or a clay coating of or on the paper sheet and/or a print or colour layer.

The paper base sheet may consist of only or substantially only the paper sheet and/or may consist of only or substantially only the paper of the paper sheet and/or may consist of only or substantially only paper.

The paper sheet may consist of only or substantially only paper.

The paper of the paper sheet may be conventional paper and may mainly or only comprise cellulose fibres. The paper of the paper sheet may mainly or only comprise lignin. The paper may comprise additives such as bonding additives, adhesive additives, and/or colouring agents. The paper may comprise or consist of machine glazed (MG) paper and/or may have been given a high finish potentially on one side only by drying the paper in continuous contact with a highly polished heated cylinder.

Any polymer of a layer of the packaging sheets according to the present disclosure may be a plastic and/or thermoplastic polymer.

Any layer which comprises a polymer, such as an ionomer, a cyclic olefin copolymer (COC), a cyclic block copolymer (CBC), an ethylene-vinyl acetate (EVA), a biopolymer, a polyolefin, a polyethylene (PE), a low density polyethylene (LDPE), a high density polyethylene (HDPE), a polypropylene (PP), a polystyrene (PS), or a polyethylene terephthalate, such as a polyethylene terephthalate glycol-modified (PET-G), may comprise at least 50, 60, 70, 80, 90, 95, or 98 percent by weight of said polymer. An "ionomer" is a polymer composed of repeat units of both electrically neutral repeating units and ionized units covalently bonded to the polymer backbone. Relevant ionomers in the context of the present disclosure include ionomers comprising or of ethylene acid copolymer, such as Surlyn™ 1652 or Primacore™ 103701. A "biopolymer" is a polymer produced by living organisms, such as sugar-based polymers, lignin, chitin, and amino acid-based polymers, such as proteins or protein polymers, and may be bio-based, biodegradable, and/or home-compostable. Relevant biopolymers in the context of the present disclosure include Braskem™ SBC818, a bio-based polymer.

A polyolefin may be defined as the class of polymers produced from a simple olefin (also called an alkene with the general formula CₙH₂ₙ) as a monomer.

One or more or all of the layers of the coextrusion coatings of the packaging sheets according to the present disclosure comprising a polyolefin may comprise or mainly consist of one or more materials selected from a PE copolymer and a PE terpolymer, each potentially comprising an ethylene-acrylic ester, an ethylene maleic anhydride, an ethylene vinyl acetate, an ethylene methyl acrylate, an ethylene butyl acrylate, a metallocene, anthylene ethyl acrylate, an ethylene acrylic acid, an ethylene methacrylic acid, an ethylene - acrylic ester - maleic anhydride (EMA) terpolymer, an ethylene-butyl acrylate maleic anhydrate ter-polymer, a random terpolymer of ethylene, an acrylic ester, and a maleic anhydride. Examples of suitable materials include LOTADER® 3410 and 3210, respectively, both random terpolymers of ethylene, acrylic ester and maleic anhydride. These layers may comprise a blend of a polymer, such as PE, and one or more further materials. In a method of manufacture of the packaging sheet, these materials may have been blended before being melted and/or before entering an extrusion worm or screw of a manufacturing apparatus. These layers may comprise or consist of a copolymer of ethylene and one or more further monomers and/or may be or comprise a PE, such as one of the PE types as disclosed herein as suitable for use in the contact layer.

The one or more tie layers or said further materials may include extrusion coating tie layer materials, such as e.g. Lotader 3410 and/or Lotader 3210, which may each be provided as a blend with PE.

Any polymer, such as the above, may in the context of the present disclosure be a copolymer of the polymer and one or more other polymers.

Such layers may further comprise one or more binders, such as polymer binders, polyurethane binders, nitrocellulose binders, and/or polyester binders. Such layers may further comprise one or more slip additives, such as wax, and/or one or more softening, colouring, and/or stiffening additives. Such layers may in some embodiments comprise pores of a gas, usually air. In such embodiments the pores may constitute less than 50, 40, 30, 20, 10, 5, or 2 percent by volume of the layer.

The paper base sheet and/or the paper sheet thereof may have a total loading in the range of 20 to 150 g/m².

The paper base sheet and/or the paper sheet thereof may have a loading in the range of 20 to 50, 30 to 40, or 40 to 50 g/m², and may, at such a loading, especially be suitable for and/or used for packaging of confectionary foods.

The paper base sheet and/or the paper sheet thereof may have a loading in the range of 50 to 100, 100 to 150, 75 to 125, 100 to 125, or 125 to 150 g/m² and may, at such loadings, especially be suitable for and/or used for packaging of tobacco products or pharmaceuticals

The paper base sheet may be or comprise a metallized paper sheet with a total loading of 20 - 150 g/m² or identical to the loadings mentioned above. The loading of the metallization may be within the intervals as mentioned above, the remaining of the total loading being the paper or the paper sheet. The "total loading" is here to be understood as the sum of the loadings of all included layers, coatings, and sheets of the paper base sheet.

The paper base sheet may comprise two or more paper sheets and/or may be double sided paper.

The paper sheet may be a fat and/or oil resistant paper sheet, such as a glassine sheet and/or a pergamyne sheet and/or a parchment sheet.

There may be no sheets and/or no layer and/or no coating and/or no material positioned between the first and/or second coating, respectively, and the associated surface of the paper base sheet.

In some embodiments, the first coating touches and/or directly abuts the first surface and/or the second coating touches and/or directly abuts the second surface.

The packaging sheet may comprise an inner surface and an outer surface, which may be associated surfaces of the first and second coatings. The inner and outer surfaces of the packaging sheet may be free surfaces and/or surfaces not covered by any further sheets or layers or coatings or material of the packaging sheet.

In the context of the present disclosure, water vapour transmission rate (WVTR) is measured according to standard test method ASTM F1249 at 38°C and 90 % atmospheric humidity and rated per 24 hours unless noted otherwise.

The packaging sheet according to option I), II), or III) may be used in or form part of a cigarette packaging and may especially be a cigarette packaging inner lining. The packaging sheet forming such an inner lining may be according to option I), II), or III), wherein the inner lining may be positioned on or at an interior of a cigarette box, which may be a cardboard box, and may be folded about a number of cigarettes, such as 10 or 20 cigarettes, and/or wherein the inner lining may be welded to itself to seal the cigarettes. Instead of cigarettes, other rod-shaped smokable and/or shag tobacco products, such as cigars, may be packaged in a similar manner.

Free and/or cut tobacco, such as pipe tobacco, may also be packaged in such packaging sheets, potentially in a flexible packaging, potentially folded to form an envelope, and potentially welded to itself to seal the product. Chewing tobacco and snuff may be packaged in a similar manner.

The packaging sheet described in option I), II), or III) may be used for a cigar package. The cigar package may comprise one cigar enveloped in the packaging sheet, which may be welded to itself to seal the cigar.

The packaging sheet described in option I), II), or III) may be used for a liquid pharmaceutical package. The packaging may comprise a container for a liquid pharmaceutical such as a vial, a tube, or a bottle, the packaging sheet potentially being welded or glued to cover an opening of the container to seal the container.

The packaging sheet described in option I), II), or III) may be used for a blister package for pharmaceuticals. The blister package may comprise one or more capsules or tablets or pills, a plastic sheet having one or more recesses for containing one or more capsules or tablets, the capsule(s) or the tablet(s) or the pill(s) being contained in (a) recess(es) of the plastic sheet, and the packaging sheet potentially being welded or sealed to a surface of the plastic sheet such that it seals the capsule(s) or the tablet(s) in the recess(es).

The packaging sheet according to option I) may be a variant, wherein one or more of polymers of the first and second coatings can be or comprise a COC.

The packaging sheet according to option I), may be a variant wherein each of the polymers of the fist and the second coatings can be a CBC.

The packaging sheet according to option I), may be a variant wherein each of the polymers of the fist and the second coatings can be an EVA.

The packaging sheet according to option I), may be a variant wherein each of the polymers of the fist and the second coatings can be a biopolymer.

The packaging sheet according to option I), may be a variant wherein each of the polymers of the fist and the second coatings can be an ionomer.

The packaging sheet according to option II), may be a variant II-a, wherein the three layers of the second coextrusion coating may consist of a contact layer comprising an LDPE, a layer comprising an LDPE contacting the paper base sheet, and a barrier layer comprising an EVOH between the contact layer and the layer contacting the paper base sheet.

The packaging sheet according to option II), may be a variant II-b, wherein the three layers of the second coextrusion coating may consist of a contact layer comprising an HDPE, a layer comprising an HDPE contacting the paper base sheet, and a barrier layer comprising an EVOH between the contact layer and the layer contacting the paper base sheet.

The packaging sheet according to option II), may be a variant II-c, wherein the three layers of the second coextrusion coating may consist of a contact layer comprising a COC, a layer comprising a COC contacting the paper base sheet, and a barrier layer comprising an EVOH between the contact layer and the layer contacting the paper base sheet.

The packaging sheet according to option II), may be a variant II-d, wherein the three layers of the second coextrusion coating may consist of a contact layer comprising a CBC, a layer comprising a CBC contacting the paper base sheet, and a barrier layer comprising an EVOH between the contact layer and the layer contacting the paper base sheet.

The packaging sheet according to option II), may be a variant II-e, wherein the three layers of the second coextrusion coating may consist of a contact layer comprising a LDPE, a layer comprising a LDPE contacting the paper base sheet, and a barrier layer comprising an PA between the contact layer and the layer contacting the paper base sheet.

The packaging sheet according to option II), may be a variant II-d, wherein the three layers of the second coextrusion coating may consist of a contact layer comprising a HDPE, a layer comprising a HDPE contacting the paper base sheet, and a barrier layer comprising an PA between the contact layer and the layer contacting the paper base sheet.

The packaging sheet according to option II), may be a variant II-e, wherein the three layers of the second coextrusion coating may consist of a contact layer comprising a PE, a layer comprising a PE contacting the paper base sheet, and a barrier layer comprising an PA between the contact layer and the layer contacting the paper base sheet.

The packaging sheet according to option III), may be a variant, wherein the three layers of each of the first and the second coextrusion coatings may be identical to the second coating of a variant selected from the variant II-a, II-b, II-c, II-d, or II-e.

The packaging sheet according to especially option IV) or V) may be used for or as a twist packaging of one or more confectionary foods in a potentially conventional way. The twist packaging may comprise a confectionary food and the packaging sheet, wherein the packaging sheet has potentially been folded about the confectionary food, and one or two opposed excess pieces of the packaging sheet have potentially been twisted or rotated to seal end(s) of the packaging, potentially so that a pull in the excess piece(s) opens the packaging.

The packaging sheet according to option IV) a) or b), may be a variant, wherein s comprises an HDPE.

The packaging sheet according to option IV) a) or b), may be a variant, wherein s comprises a COC.

The packaging sheet according to option IV) a) may be a variant wherein the second coating comprises the following layers, in sequence where the tie layer is in contact with the paper base sheet:
a tie layer comprising 4-8 g/m² of a PE and a contact layer comprising 6-12 g/m² of an HDPE; or
a tie layer comprising 4-8 g/m² of a PE and a contact layer comprising 6-12 g/m² of a COC.

The packaging sheet according to option IV) b) may be a variant, wherein the second coating comprises the following layers, in sequence where the first layer is in contact with the paper base sheet:
a first layer comprising 2-4 g/m² of a PE, a layer comprising 6-12 g/m² of an HDPE, and a layer comprising 2-4 g/m² of a PE, or
a second layer comprising 2-4 g/m² of a PE, a layer comprising 6-12 g/m² of an COC, and a layer comprising 2-4 g/m² of a PE.

In another aspect, the present invention relates to a packaging according to claim 13.

Hereby, advantages and effects similar to the ones achieved according to other aspects of the invention may be achieved.

Such a package may be a package comprising the sheet according to the present disclosure and one or more confectionary foods, such as a chocolate, a toffee, a candy, a jelly, a biscuit, or a caramel.

Such a package may alternatively be a package comprising the sheet according to the present disclosure and one or more tobacco products such as cigarettes, cigars, or shag tobacco.

Furthermore, such a package may be a package comprising a packaging sheet according to the present disclosure and one or more pharmaceutical products, such as a capsule, a tablet, or a liquid, comprising an active pharmaceutical ingredient and positioned in a container, such as a bottle, a vial, a tube, or a blister package.

In a third aspect, the invention relates to a method according to claim 14.

Hereby, advantages and effects similar to the ones achieved according to other aspects of the invention may be achieved.

Such a method may comprise a step of dispersion coating the dispersion coating on the paper base sheet.

Such a method may also or alternatively comprise a step of extrusion coating the extrusion coating(s) on the paper base sheet. In case of coextrusion coatings, this step may involve coextrusion coating the coextrusion coating(s) on the paper base sheet.

In a fourth aspect, the invention relates to a use according to claim 15.

Hereby, advantages and effects similar to the ones achieved according to other aspects of the invention may be achieved.

Extrusion coating and coextrusion coating are well-known processes where a carrier foil or base sheet layer is moved between two rollers, a cooling roller and a counter roller, respectively. Coextrusion is a process of extruding two or more materials through a single die of an extruder so that the extrudates merge and weld together into a laminar structure before chilling or quenching. Coextrusion can be employed in film blowing, free film extrusion, and extrusion coating processes, the latter being referred to as coextrusion coating. Extrusion lamination and coextrusion lamination are processes comparable to extrusion coating and coextrusion coating, respectively, but which differ in that two sheets of material are laminated together.

In the present methods, the layers of any one of the coextrusion coated layers may together be applied or coated as one single thermoplastic polymeric melt extruded or coextruded from a die of an extruder. The coextrusion coated layers may be applied between the paper base sheet and a cooling roller in a continuous process. The paper base sheet may hereby act as a carrier foil or a base sheet for the extrusion coating. Upon contact with the cooling roller, the melt may solidify, and upon contact with the carrier foil the thermoplastic melt may be adhered to the paper base sheet, potentially without the use of an adhesive/glue layer between them. The result will be the paper base sheet coated with a thin layer of the coextruded thermoplastic material, which comprises the layers of the first or second coating on the paper base sheet.

The extrusion coating or the coextrusion coating step may be performed by means of an extruder.

The two or more coextruded melts may be extruded together from one common die. While still not having been chilled and solidified, the melts may be coated onto the paper base sheet so that the coextruded layers adhere to the paper base sheet. A primer may be applied to the paper sheet of the paper base sheet before the coextruded melt is applied to it to improve adherence.

The coextrusion coated layers of either the first or the second coating may immediately adhere to each other during the coextrusion coating step. Hereby, tooling costs may be lowered since the coextruded layers can be applied by the same machine. The manufacturing time may be shortened accordingly since the application of the coextruded layers can be done at the same time, instead of having to apply one or more adhesive/glue layers in one or more separate steps.

In the methods according to this disclosure, the material for forming each of the coextrusion coated layers of the first or the second coating may be fed into a feed block of an extruder through a respective separate feeder, which may comprise a worm or other means for transporting the materials through the feeder and into the feed block.

The melts or extrudates within the die may merge and weld together into a laminar structure to form the coextrusion coated layers that are applied onto the paper base sheet before chilling or quenching. Chilling or quenching may be carried out by applying the coextrusion coated layers and/or the packaging sheet onto a cooling roller in a subsequently performed coating step of the coextrusion coating process. In the coating step, the two or more coextruded melts may be extruded on or onto the paper base sheet so that the coextruded layers adhere to the paper base sheet, thus forming the coextrusion coating. The coextruded layers and the base sheet may be guided through a nip between the cooling roller and an opposed pressure roller, and pressure may be applied between the two rollers. The coextrusion coated layers or an outer layer thereof may face the cooling roller, the paper base sheet facing the pressure roller. As mentioned, a primer may be applied to the paper sheet before the coextruded melt is applied onto it. The potential primer is preferably applied to the paper sheet immediately before the coextruded layers are coated onto the paper base sheet, e.g. less than 60, 30, 15, 5, 4, 3, 2, or 1 seconds before.

The above and/or additional objects, features, and advantages of the present invention will be further outlined by the following illustrative and nonlimiting detailed description of embodiments of the present invention, with reference to the appended drawings, in which:
Fig. 1 schematically shows a cross sectional view of a packaging sheet 10 according to an embodiment of the packaging sheets according to the above option I).
Fig. 2 schematically shows a cross sectional view of a packaging sheet 20 according to an embodiment of the packaging sheets according to the above options II) and/or IV) b).
Fig. 3 schematically shows a cross sectional view of a packaging sheet 30 according to an embodiment of the packaging sheets according to the above option III).
Fig. 4 schematically shows a cross sectional view of a packaging sheet 40 according to an embodiment of the packaging sheets according to the above option IV) a).
Fig. 5 schematically shows a cross sectional view of a packaging sheet 50 according to an embodiment of the packaging sheets according to the above option V) a).
Fig. 6 schematically shows a cross sectional view of a packaging sheet 60 according to an embodiment of the packaging sheets according to the above option V) b).
Fig. 7 schematically shows a cross sectional view of a packaging sheet 70 according to an embodiment of the packaging sheets according to the above options II) and/or III).
Fig. 8 schematically shows a cross sectional view of a packaging sheet 80 according to an embodiment of the packaging sheets of the present disclosure.
Fig. 9 schematically illustrates a method of manufacture of the packaging sheet of any one of Fig. 1 to Fig. 10 according to an embodiment of the methods according to the present disclosure.
Fig. 10 schematically shows a cross sectional view of a packaging sheet 100 according to a modified version of the embodiment of the packaging sheet of Fig. 1.

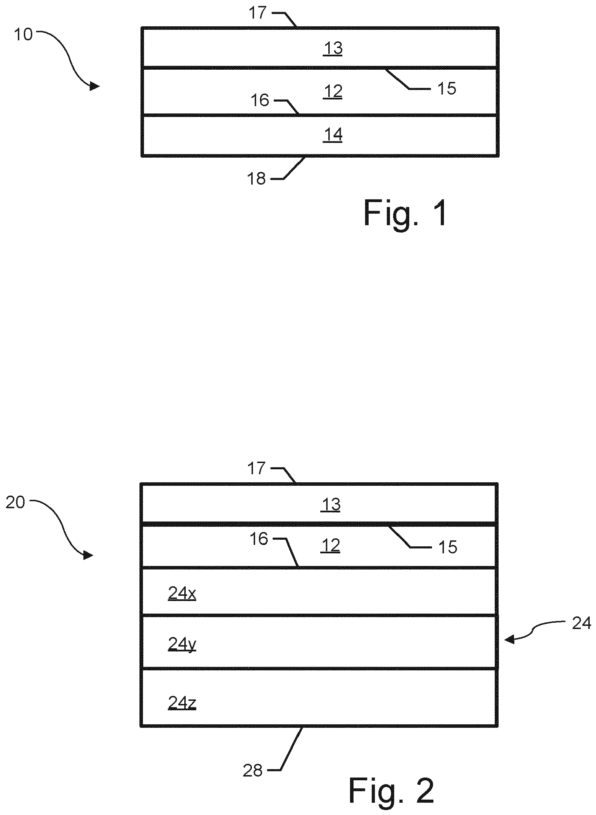

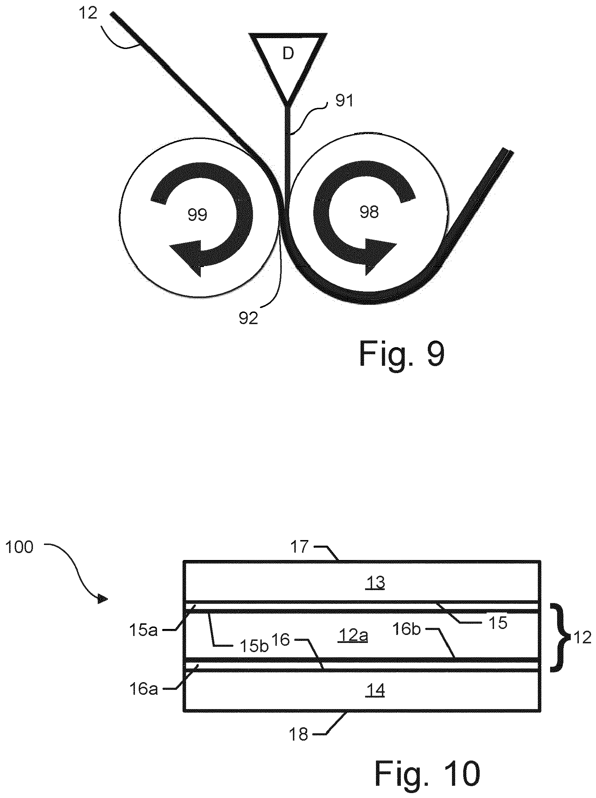

Figs 1 to 8 and 10 show different embodiments of packaging sheets. All these packaging sheets may be manufactured using the method as described below and illustrated in Fig. 9.

The packaging sheet 10 shown in Fig. 1 is suitable for packaging of confectionary foods, pharmaceuticals, or tobacco products. The packaging sheet 10 comprises an inner surface 18 and an outer surface 17, the inner surface 18 being configured or intended for facing or coming into contact with a product to be packaged. The packaging sheet 10 further comprises a paper base sheet 12 with a first surface 15 and a second surface 16, the second surface 16 being positioned oppositely to the first surface 15. The paper base sheet of this embodiment consists of a paper sheet of paper. The packaging sheet 10 further comprises a first coating 13 coated directly on the first surface 15 of the paper base sheet 12, and a second coating 14 coated directly on the second surface 16 of the paper base sheet 12. The first coating 13 and the second coating 14 are each extrusion coatings, each of the first coating 13 and second coating 14 consisting of one single extruded layer (a monolayer) comprising a polymer, wherein the polymer of each extrusion coating is selected from an ionomer, a COC, a CBC, an EVA, and a biopolymer. No further layers are present in the sheet 10.

The inner surface 18 and the outer surface 17 of the packaging sheet 10 are free surfaces not covered by any further layers or coatings of the packaging sheet.

The packaging sheet 20 shown in Fig. 2 is suitable for packaging of confectionary foods, pharmaceuticals, or tobacco products. The packaging sheet 20 comprises an inner surface 28 and an outer surface 17, the inner surface 28 being configured or intended for facing or coming into contact with a product to be packaged. The packaging sheet 20 further comprises a paper base sheet 12 with a first surface 15 and a second surface 16, the second surface 16 being positioned oppositely to the first surface 15. The paper base sheet of this embodiment consists of a paper sheet of paper. The packaging sheet 20 further comprises a first coating 13 coated directly on the first surface 15 of the paper base sheet 12, and a second coating 24 coated directly on the second surface 16 of the paper base sheet 12. The first coating 13 is an extrusion coating consisting of one single extruded layer comprising a polymer selected from an LDPE, an HDPE, an ionomer, a COC, a CBC, an EVA, and a biopolymer, and the second coating 24 is a coextrusion coating consisting of three coextrusion coated polymer layers 24x, 24y, and 24z, wherein 24x is positioned between the paper base sheet and 24y, 24y is positioned between 24x and 24z and comprises an EVOH or a PA, and each of 24x and 24z comprises a polymer selected from an LDPE, an HDPE, a COC, and a CBC. The inner surface 18 and the outer surface 27 of the packaging sheet 20 are free surfaces not covered by any further layers or coatings of the packaging sheet.

In a modification of the embodiment of Fig. 2, 24x comprises a PE and has a loading in the range of 2-4 g/m², 24y comprises an HDPE or a COC and has a loading in the range of 6-12 g/m², and 24z comprises a PE and has a loading in the range of 2-4 g/m². This modification is suitable for packaging of confectionary foods

The embodiment of Fig. 2 can be modified by replacing the first coating 13 by a dispersion coating comprising a PE, and where 24x and 24z each comprises a PE, and 24y comprises an HDPE or a COC.

In another modification, an extrusion coating primer has been applied to the surfaces 15 and/or 16 of the paper base sheet 12 before the extrusion coating of the first coating 13 and/or the second coating 24, respectively.

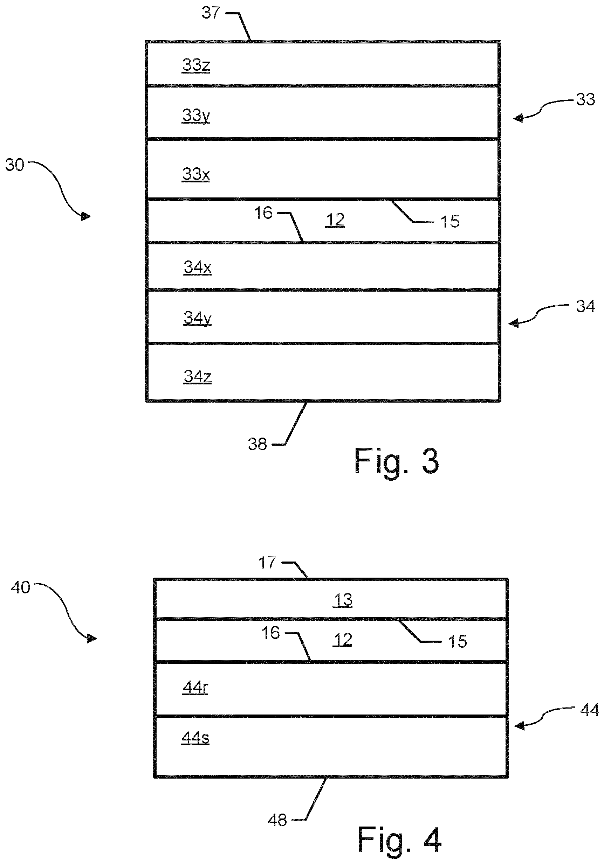

The packaging sheet 30 shown in Fig. 3 is suitable for packaging of pharmaceuticals or tobacco products. The packaging sheet 30 comprises an inner surface 38 and an outer surface 37, the inner surface 38 being configured for facing or coming into contact with a product to be packaged. The packaging sheet 30 further comprises a paper base sheet 12 with a first surface 15 and a second surface 16, the second surface 16 being positioned oppositely to the first surface 15. The paper base sheet of this embodiment consists of a paper sheet of paper. The packaging sheet 30 further comprises a first coating 33 coated directly on the first surface 15 of the paper base sheet 12, and a second coating 34 coated directly on the second surface 16 of the paper base sheet 12. The first coating 33 and the second coating 34 are coextrusion coatings, the first coating 33 consisting of three coextrusion coated polymer layers 33x, 33y, and 33z, wherein 33x is positioned between the paper base sheet and 33y, 33y is positioned between 33x and 33z and comprises an EVOH or a PA, and each of 33x and 33z comprises a polymer selected from an LDPE, an HDPE, a COC, and a CBC. The second coating 34 consists of three coextrusion coated polymer layers 34x, 34y, and 34z, wherein 34x is positioned between the paper base sheet and 34y, 34y is positioned between 34x and 34z and comprises an EVOH or a PA, and each of 34x and 34z comprises a polymer selected from an LDPE, an HDPE, a COC, and a CBC. The inner surface 38 and the outer surface 37 of the packaging sheet 30 are free surfaces not covered by any further layers or coatings of the packaging sheet.

The packaging sheet 40 shown in Fig. 4 is suitable for packaging of confectionary foods. The packaging sheet 40 comprises an inner surface 48 and an outer surface 17, the inner surface 38 being configured for facing or coming into contact with a product to be packaged. The packaging sheet 40 further comprises a paper base sheet 12 with a first surface 15 and a second surface 16, the second surface 16 being positioned oppositely to the first surface 15. The paper base sheet of this embodiment consists of a paper sheet of paper. The packaging sheet 40 further comprises a first coating 13 coated directly on the first surface 15 of the paper base sheet 12, and a second coating 44 coated directly on the second surface 16 of the paper base sheet 12. The first coating 13 is a dispersion coating comprising a PE, and the second coating 44 is a coextrusion coating. The second coating 44 consists of two coextrusion coated polymer layers 44r and 44s, 44r being positioned between the paper base sheet and 44s, 44r comprising a PE, and having a loading in the range of 4-8 g/m² and 44s comprising an HDPE or a COC and having a loading in the range of 6-12 g/m². The inner surface 48 and the outer surface 17 of the packaging sheet 40 are free surfaces not covered by any further layers or coatings of the packaging sheet.

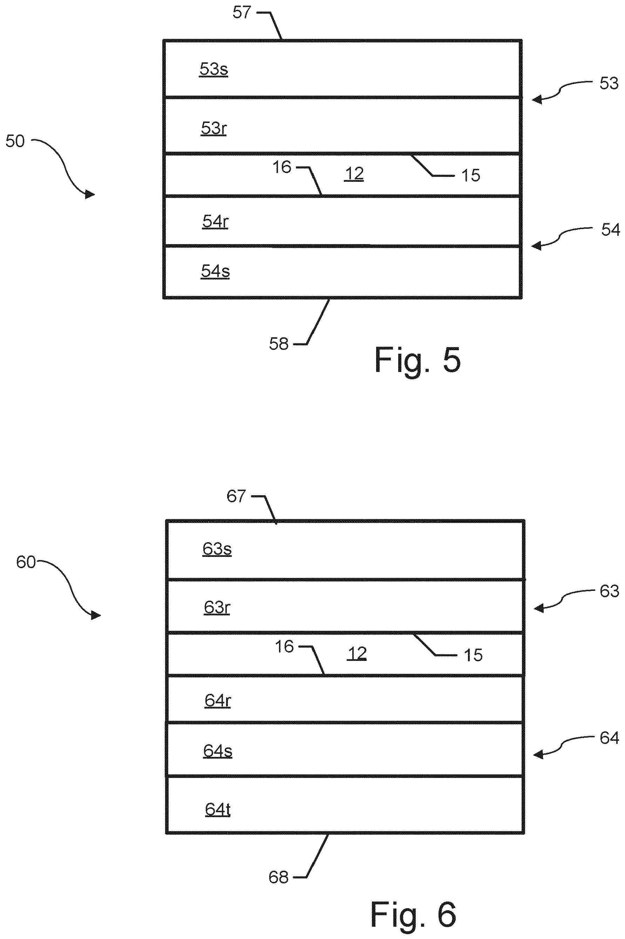

The packaging sheet 50 shown in Fig. 5 is suitable for packaging of confectionary foods, pharmaceuticals, or tobacco products. The packaging sheet 50 comprises an inner surface 58 and an outer surface 57, the inner surface 58 being configured for facing or coming into contact with a product to be packaged. The packaging sheet 50 further comprises a paper base sheet 12 with a first surface 15 and a second surface 16, the second surface 16 being positioned oppositely to the first surface 15. The paper base sheet of this embodiment consists of a paper sheet of paper. The packaging sheet 50 further comprises a first coating 53 coated directly on the first surface 15 of the paper base sheet 12, and a second coating 54 coated directly on the second surface 16 of the paper base sheet 12. The first coating 53 and the second coating 54 are coextrusion coatings. The first coating 53 consists of two coextrusion coated polymer layers 53r and 53s, 53r being positioned between the paper base sheet and 53s, 53r comprising a PE, and 53s comprising an HDPE or a COC. The second coating 54 consists of two coextrusion coated polymer layers 54r and 54s, 54r being positioned between the paper base sheet and 54s, 54r comprising a PE, and 54s comprising an HDPE or a COC. The inner surface 58 and the outer surface 57 of the packaging sheet 60 are free surfaces not covered by any further layers or coatings of the packaging sheet.

The packaging sheet 60 shown in Fig. 6 is suitable for packaging of confectionary foods, pharmaceuticals, or tobacco products. The packaging sheet 60 comprises an inner surface 68 and an outer surface 67, the inner surface 68 being configured for facing or coming into contact with a product to be packaged. The packaging sheet 60 further comprises a paper base sheet 12 with a first surface 15 and a second surface 16, the second surface 16 being positioned oppositely to the first surface 15. The paper base sheet of this embodiment consists of a paper sheet of paper. The packaging sheet 60 further comprises a first coating 63 coated directly on the first surface 15 of the paper base sheet 12, and a second coating 64 coated directly on the second surface 16 of the paper base sheet 12. The first coating 63 and the second coating 64 are coextrusion coatings. The first coating 63 consists of two coextrusion coated polymer layers 63r and 63s, 63r being positioned between the paper base sheet and 63s, 63r comprising a PE, and 63s comprising an HDPE or a COC. The second coating 64 consists of three coextrusion coated polymer layers 64r, 64s, and 64t, 64s being positioned between 64r and 64t, 64r being positioned between the paper base sheet and 64s, 64r and 64t comprising a PE, and 64s comprising an HDPE or a COC. The inner surface 68 and the outer surface 67 of the packaging sheet 60 are free surfaces not covered by any further layers or coatings of the packaging sheet.

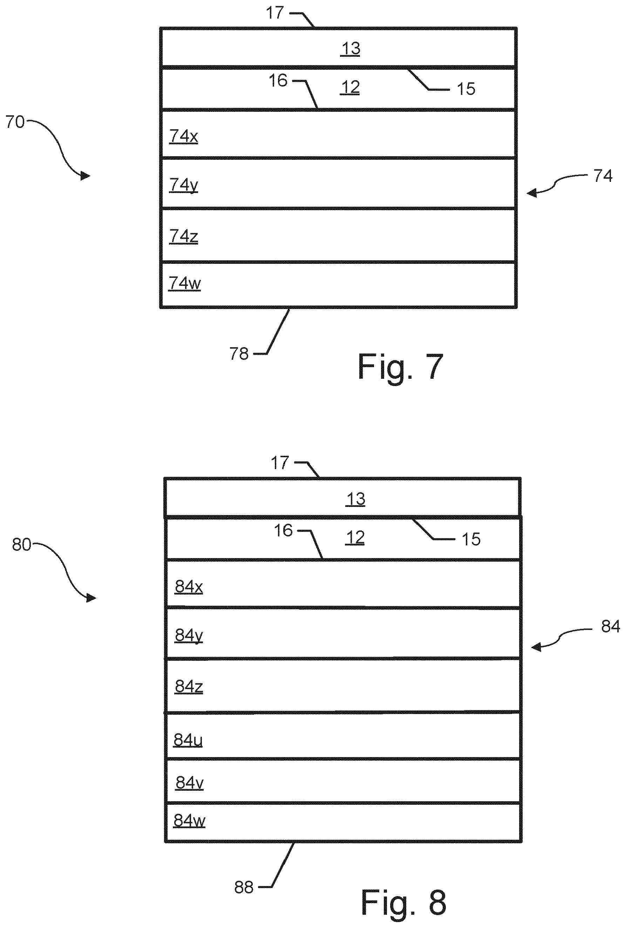

The packaging sheet 70 shown in Fig. 7 is suitable for packaging of confectionary foods, pharmaceuticals, or tobacco products. The packaging sheet 70 comprises an inner surface 78 and an outer surface 17, the inner surface 78 being configured for facing or coming into contact with a product to be packaged. The packaging sheet 70 further comprises a paper base sheet 12 with a first surface 15 and a second surface 16, the second surface 16 being positioned oppositely to the first surface 15. The paper base sheet of this embodiment consists of a paper sheet of paper. The packaging sheet 70 further comprises a first coating 13 coated directly on the first surface 15 of the paper base sheet 12, and a second coating 74 coated directly on the second surface 16 of the paper base sheet 12. The first coating 13 is an extrusion coating consisting of one single extruded layer comprising a polymer selected from an LDPE, an HDPE, an ionomer, a COC, a CBC, an EVA, and a biopolymer, and the second coating 74 is a coextrusion coating consisting of, in sequence, four coextrusion coated polymer layers 74x, 74y, 74z, and 74w, wherein 74x is positioned between the paper base sheet and 74y. 74y comprises an EVOH or a PA, and each of 74x and 74z comprises a polymer selected from an LDPE, an HDPE, a COC, and a CBC. 74w comprises a polymer selected from an LPDE, an HDPE, a COC, a CBC, a PP, a PS, and a PET-G. The inner surface 78 and the outer surface 17 of the packaging sheet 20 are free surfaces not covered by any further layers or coatings of the packaging sheet.

In a modification of the embodiment of Fig. 7, the first coating 13 is replaced by a dispersion coating comprising a PE, and the second coating 74 is a coextrusion coating consisting of, in sequence, the four coextrusion coated polymer layers 74x, 74y, 74z, and 74w.

The packaging sheet 80 shown in Fig. 8 comprises an inner surface 88 and an outer surface 17, the inner surface 88 being configured for facing or coming into contact with a product to be packaged. The packaging sheet 80 further comprises a paper base sheet 12 with a first surface 15 and a second surface 16, the second surface 16 being positioned oppositely to the first surface 15. The paper base sheet of this embodiment consists of a paper sheet of paper. The packaging sheet 70 further comprises a first coating 13 coated directly on the first surface 15 of the paper base sheet 12, and a second coating 84 coated directly on the second surface 16 of the paper base sheet 12. The first coating 13 is an extrusion coating consisting of one single extruded layer comprising a polymer selected from an LDPE, an HDPE, an ionomer, a COC, a CBC, an EVA, and a biopolymer, and the second coating 84 is a coextrusion coating consisting of, in sequence, six coextrusion coated polymer layers 84x, 84y, 84z, 84u, 84v and 84w, wherein 84x is positioned between the paper base sheet and 84y. Each of 84x and 84z comprises an LPDE, 84y comprises a PA, 84u comprises an EVOH, 84v comprises an LDPE, and 84w comprises a polymer selected from an LPDE, an HDPE, a COC, a CBC, a PP, a PS, and a PET-G. The inner surface 88 and the outer surface 17 of the packaging sheet 80 are free surfaces not covered by any further layers or coatings of the packaging sheet.

In a modification of the embodiment of Fig. 8, the first coating 13 is replaced with a dispersion coating comprising a PE, and the second coating 78 is a coextrusion coating consisting of, in sequence, the six coextrusion coated polymer layers 84x, 84y, 84z, 84u, 84v and 84w.

In another modification, the packaging sheet 10, 20, 30, 40, 50, 60, 70, 80, or 100 has an outer layer of the first coating and/or the second coating comprising an EVOH or substantially consisting of an EVOH.

As shown in the figures, coextrusion coated layers, such as 24, 33, 34, 44, 53, 54, 63, 64, 74, and 84, adhere to the paper base sheet 12 without a separate adhesive/glue layer being provided between the paper base sheet and the coextrusion coated layers. Further, the polymer layers of the coextrusion coated layers adhere to adjacent polymer layers without a separate adhesive/glue layer being provided between them.

The packaging sheets 10, 20, 30, 40, 50, 60, 70 and 80 are manufactured in an extrusion or coextrusion coating process as illustrated in Fig. 9. Fig. 9 illustrates the extrusion coating or coextrusion coating of the second coating on the surface 16 of the paper base sheet 12.

In the coating process of the extrusion or coextrusion coating step(s), the paper base sheet 12 is continuously rolled off from a feed roll (not shown) to be moved between a cooling roller 98 and a counter roller or pressure roller 99. The cooling roller 98 has a chilled or cooled outer surface onto which a melt 91 of the material eventually forming the second coating on the paper base sheet 12. The melt 91 is applied from an extruder die D positioned between the paper base sheet 12 and the cooling roller 98. Before reaching the die D, polymer material(s) eventually forming the layer(s) of the extrusion coating or coextrusion coating is/are fed into a feed block of an extruder through an associated separate feeder, which comprises a worm for transporting the material(s) through the feeder and into the feed block. The extrusion or coextrusion coating step shown in Fig. 9 is thus a continuous process, the rollers 98, 99 rotating along the arrows shown in Fig. 9 to continuously pull the paper base sheet 12 off of the feed roll. Upon contact with the paper base sheet 12 at or right before a nip 92 between the rollers 98, 99, the melt 91 adheres to the paper base sheet 12. Subsequently, or at the same time, upon contact with the cooling roller 98, the melt 91 is chilled to solidify. The result is the paper base sheet 12 coated with the second coating.

The melt 91 comprises one or several melts of the materials of the polymer that are extruded or coextruded, i.e. extruded together through the single die D of the extruder, respectively. Thus, the extruded or coextruded melt(s) are extrusion coated or coextrusion coated on the paper base sheet 12 so that the second coating adheres to the base sheet 12. The melt 91 and the paper base sheet 12 are guided through the nip 92 between the cooling roller 98 and the opposed pressure roller 99 so that the melt 91 faces and contacts the cooling roller 8, and the outer surface 16 of the paper base sheet 12 faces and contacts the pressure roller 99.

Hereby, the second coating is extrusion coated or coextrusion coated on the first surface 16 of the paper base sheet 12 so that an outwardly facing surface of the second coating establishes the inner surface of the packaging sheet.

Extrusion or coextrusion occurs through the single die D of the extruder so that the extrudates merge and weld together into a laminar structure in the melt 91. The polymer layer(s) of the second coating are applied as a thermoplastic polymeric melt between the paper base sheet 12 and the cooling roller 98 in a continuous process. Upon contact with the cooling roller 98, the melt solidifies, and upon contact with the paper base sheet 12, the thermoplastic melt is adhered to the paper base sheet 12, without the use of an adhesive/glue layer between them. The result is the paper base sheet 12 coated with a thin layer of the extruded or coextruded thermoplastic material(s) of the layer(s) of the second coating.

The paper base sheet 12 coated with the second coating then proceeds to be coated with the first coating on the opposite surface 15 of the paper base sheet 12. Before proceeding, the paper base sheet coated with the second coating may be rolled up on a not shown collecting roller and may potentially be stored, the paper base sheet coated with the second coating then later being rolled off again from the collection coater to be coated with the first coating. If the first coating is also an extrusion coating or a coextrusion coating, the process illustrated in Fig. 9 is repeated with the paper base sheet 12 coated with the second coating acting as a new base sheet, i.e. replacing the paper base sheet in Fig. 9. As in the embodiment of Fig. 10 as described below, an extrusion coating primer can be applied to the paper base sheet 12, before the extruded or coextruded melt is applied to it, in order to improve adherence between the extruded or coextruded melt and the paper base sheet 12. The extrusion coating primer layer 16a as shown in Fig. 10 can be applied to the paper sheet 12a immediately before the extruded layer 14 is coated on the paper base sheet 12.

When coextrusion coating several layers of a coating on the paper base sheet 12, the layers of the coating immediately adhere to each other.

The melts or extrudates within the die D merge and weld together into a laminar structure to form the extruded or coextruded coating which is applied onto the paper base sheet 12 before chilling or quenching.

The chilling or quenching is carried out by applying the paper base sheet 12 coated with the first, and subsequently potentially the first coating, onto the cooling roller 98. A pressure is applied between the two rollers 98, 99.

To apply the second extrusion coating or coextrusion coating to the second surface of the paper base sheet 12, the paper base sheet coated with the second coating is thus subjected to an extrusion coating process as shown in Fig. 9, but wherein the paper base sheet 12 in Fig. 9 has been replaced by the paper base sheet 12 coated with the second coating. The paper base sheet 12 coated with the second coating is arranged so that the melt for the first coating is then extruded on or onto the second surface of the paper base sheet 12. Hereby, the first coating is extrusion coated or coextrusion coated on the second surface of the base sheet 12 so that an inner surface of first coating establishes the inner surface of the packaging sheet. If the first coating is a dispersion coating instead of an extrusion coating or a coextrusion coating, the dispersion coating is instead carried out on the surface 15 of the paper base sheet 12.

Fig. 10 shows a modification of the embodiment of Fig. 1 in which the paper base sheet 12 includes an extrusion coating primer layer 16a applied or provided between a paper sheet or paper layer 12a of the paper base sheet 12 and the second coating 14. The primer 16a is applied to the surface 16b of the paper layer 12a before the extrusion coating of the first coating 13. The extrusion coating primer layer has a loading of less than 1, 0.5, 0.3, 0.2, 0.1, or 0.05 g/m² and/or comprises or substantially consist of a polyethylene imine, an ethylene acrylic acid, and/or a polypropylene (PP) based primer. The paper base sheet 12 also includes a metallization 15a provided between the paper sheet 12a and the first coating 13. The metallization 15a is provided on or applied to the surface 15b of the paper layer before the extrusion coating of the second coating 14. The loading of the metallization may be less than or equal to 5, 4, or 3 g/m² and/or higher than or equal to 1, 2, or 3 g/m². The metallization 15a and primer layer 16a form part of the paper base sheet 12 and are provided directly on the paper sheet 12a. The metallization 15a establishes the surface 15 of the paper base sheet, and the primer layer establishes the surface 16 of the paper base sheet. The primer layer 16a is applied directly on the paper of the paper sheet 12a before the second coating 14 is coated on the paper base sheet 12. The paper base sheet 12 does not comprise any extrusion coated or coextrusion coated or extrusion laminated layers. The primer layer 16a and metallization 15a may be according to any one of the embodiments thereof disclosed herein. A metal layer produced by the metallization may include a metal, such as Al. The thickness of the metal layer is very small, such as less than 1 um, especially in the nm range.

In the embodiments of the figures, the paper base sheet 12 comprises one paper sheet. Any one of the embodiments could be modified so that the paper base sheet 12 includes one or more further paper sheets, which may be adhered or laminated to each other, e.g. using a glue or adhesive.

Any one of the embodiments of Figs 1 to 8 may similarly comprise a metallization and/or a primer layer on either surface of a paper layer of the paper base sheet 12. The surfaces of the paper layer may also include a ceramic coating and/or a clay coating and/or a print or colour layer. Several of these options may also be provided on either side of the paper layer. For example, in Fig. 10, a further extrusion coating primer layer of the paper base sheet 12 may be provided on the metallization 15a so as to be located between the metallization 15a and the first coating 13.

The paper base sheet 12 and/or the paper sheet 12a thereof in any one of the embodiments of the figures may have a loading in the range of 20 to 150 g/m².

The paper base sheet 12 or the paper sheet 12a may be a fat and/or oil resistant paper sheet.

In all the embodiments of the figures there is nothing, such as sheets, layers, coatings, and material, positioned between the first and second coating, respectively, and the associated surface of the paper base sheet 12. Rather, the first coating touches and directly abuts the first surface, and the second coating touches and directly abuts the second surface.

### Experiments

The following embodiments, samples No. 1-9, are intermediate products of the packaging sheet 40 according to Fig. 4, wherein no coating has been coated (yet) on or onto the first surface 15 of the paper base sheet 12. Hence, in these embodiments the second coating 44 is the only coating, which has been coated on or onto the paper base sheet 12. The samples No. 1-9 appearing from Table 1 below were manufactured using a method as described with reference to Fig. 9 at usual extrusion coating parameters.

The paper base sheet 12 ("B paper") a 60 g/m² white MG Kraft paper, BillerudKorsnas™ ConFlex Silk™.

"HDPE1" was Borealis™ Polyethylene CG8410, an HDPE.

"HDPE2" was Borealis™ Polyethylene CG9620, an HDPE.

"PE" was Borealis™ Polyethylene CA9150, an LDPE.

"COC" was Topas™ 8007F-600, a COC.

**Table 1**

| No. | Paper base sheet | Layer 44r of the second coating 44 | Loading, layer 44r (g/m²) | Layer 44s of the second coating 44 | Loading, layer 44s (g/m²) |
|---|---|---|---|---|---|
| 1 | B Paper | PE | 4 | HDPE1 | 6 |
| 2 | B Paper | PE | 6 | HDPE1 | 9 |
| 3 | B Paper | PE | 8 | HDPE1 | 12 |
| 4 | B Paper | PE | 4 | HDPE2 | 6 |
| 5 | B Paper | PE | 6 | HDPE2 | 9 |
| 6 | B Paper | PE | 8 | HDPE2 | 12 |
| 7 | B Paper | PE | 4 | COC | 6 |
| 8 | B Paper | PE | 6 | COC | 9 |
| 9 | B Paper | PE | 8 | COC | 12 |

Coefficients of friction (dynamic and static) for the inner surface 48 against the inner surface 48, SIT of the inner surface 48 and WVRT were measured for each of the samples 1-9 and appear from Table 2 below.

**Table 2**

| No. | COF_{d} | COFₛ | SIT (±5°C, 0.3s, 500N) | WVTR (38°C, 90% RH, ASTM F1249) |
|---|---|---|---|---|
| 1 | 0.28 | 0.29 | 115 | 40 |
| | 0.35 | 0.37 | | |
| | 0.34 | 0.39 | | |
| 2 | 0.28 | 0.29 | 115-120 | 28 |
| | 0.35 | 0.37 | | |
| | 0.34 | 0.39 | | |
| 3 | 0.28 | 0.29 | 120 | 19 |
| | 0.35 | 0.37 | | |
| | 0.34 | 0.39 | | |
| 4 | 0.32 | 0.29 | 125 | 35 |
| | 0.34 | 0.23 | | |
| | 0.32 | 0.26 | | |
| 5 | 0.32 | 0.29 | 125 | 27 |
| | 0.34 | 0.23 | | |
| | 0.32 | 0.26 | | |
| 6 | 0.32 | 0.29 | 125 | 19 |
| | 0.34 | 0.23 | | |
| | 0.32 | 0.26 | | |
| 7 | 0.15 | 0.15 | 100-05 | 14 |
| | 0.17 | 0.17 | | |
| 8 | 0.15 | 0.15 | 105-110 | 10 |
| | 0.17 | 0.17 | | |
| 9 | 0.15 | 0.15 | 105-110 | 7 |
| | 0.17 | 0.17 | | |

The following embodiments, samples No. 10-18, are intermediate products of the packaging sheet 20 according to Fig. 2, wherein no coating has been coated on or onto the first surface 15 of the paper base sheet 12. Hence, in these embodiments the second coating 24 is the only coating, which has been coated on or onto the paper base sheet 12. The samples No. 10-18 were manufactured using a method as described with reference to Fig. 9.

**Table 3**

| No. | Paper base sheet | Layer 24x | Loading, layer 24x (g/m²) | Layer 24y | Loading, layer 24y (g/m²) | Layer 24z | Loading, layer 24z (g/m²) |
|---|---|---|---|---|---|---|---|
| 10 | B Paper | PE | 2 | HDPE1 | 6 | PE | 2 |
| 11 | B Paper | PE | 3 | HDPE1 | 9 | PE | 3 |
| 12 | B Paper | PE | 4 | HDPE1 | 12 | PE | 4 |
| 13 | B Paper | PE | 2 | HDPE2 | 6 | PE | 2 |
| 14 | B Paper | PE | 3 | HDPE2 | 9 | PE | 3 |
| 15 | B Paper | PE | 4 | HDPE2 | 12 | PE | 4 |
| 16 | B Paper | PE | 2 | COC | 6 | PE | 2 |
| 17 | B Paper | PE | 3 | COC | 9 | PE | 3 |
| 18 | B Paper | PE | 4 | COC | 12 | PE | 4 |

Coefficients of friction (dynamic and static) for the inner surface 28 against the inner surface layer 28, SIT of the inner surface 28 and WVRT were obtained for each of the samples 10-18:

**Table 4**

| No. | COF_{d} | COFₛ | SIT (±5°C, 0.3s, 500N) | WVTR (38°C, 90% RH, ASTM F1249) |
|---|---|---|---|---|
| 10 | 0.55 | 0.47 | 90-95 | 40 |
| | 0.56 | 0.49 | | |
| | 0.48 | 0.53 | | |
| 11 | 0.55 | 0.47 | 95 | 25 |
| | 0.56 | 0.49 | | |
| | 0.48 | 0.53 | | |
| 12 | 0.55 | 0.47 | 95 | 19 |
| | 0.56 | 0.49 | | |
| | 0.48 | 0.53 | | |
| 13 | 0.50 | 0.40 | 95 | 30 |
| | 0.47 | 0.39 | | |
| 14 | 0.50 | 0.40 | 95 | 22 |
| | 0.47 | 0.39 | | |
| 15 | 0.50 | 0.40 | 95 | 16 |
| | 0.47 | 0.39 | | |
| 16 | 0.51 | 0.39 | 95-100 | 12 |
| | 0.51 | 0.46 | | |
| | 0.54 | 0.47 | | |
| 17 | 0.51 | 0.39 | 95-100 | 9 |
| | 0.51 | 0.46 | | |
| | 0.54 | 0.47 | | |
| 18 | 0.51 | 0.39 | 95-100 | 7 |
| | 0.51 | 0.46 | | |
| | 0.54 | 0.47 | | |

As can be seen from Tables 2 and 4, the COF_{d} of samples with an inner surface of an HDPE (samples No. 1-9, COF_{d} = 0.28-0.35) is markedly lower relative to that of samples with an inner surface of a PE (samples No. 10-15, COF_{d} = 0.48-0.56). In addition, samples with an inner surface of a COC (samples No. 16-18, COF_{d} = 0.48-0.56) have markedly lower COF_{d} than any of the other samples. All of the samples have a dynamic coefficient of friction suitable for packaging of goods in high-speed packaging machines.

The low SIT of the samples (samples No. 1-9, 95-100°C; samples No. 10-15, 115-125°C; and samples No. 16-18, 100-110°C) allows for a product or an item to be packaged with the sample packaging sheet in a short amount of time since heating the packaging sheet or the inner surface to its SIT requires only a small change in temperature. Also, the low SIT of the samples may maintain desired properties of other layers of the packaging sheet.

In addition, the samples No. 1-18 demonstrate a WVTR of 7-40 g/m²/day. If, on each sample, a first coating similar to the second coating coated on the inner surface were coated on the outer surface of the paper base sheet 12, the packaging sheet obtained can be expected to have a satisfactory barrier to water vapour (about half the measured value), such that the packaging sheets may be suitable for storage of e.g. tobacco products, pharmaceuticals, and/or confectionary foods. Additionally, barriers created by such packaging sheets may also lead to low or no exchange of oxygen between the surrounding environment and an inside of the package.

## Claims

1. A packaging sheet for packaging of pharmaceuticals, tobacco products, and/or food products comprising or consisting of:
a paper base sheet comprising a paper sheet of paper, the paper base sheet having a first surface and a second surface, the second surface being positioned oppositely to the first surface;
a first coating coated directly on the first surface of the paper base sheet; and
a second coating coated directly on the second surface of the paper base sheet;
wherein either:
I) the first coating and the second coating are each extrusion coatings, each of the first and second coatings consisting of one single extruded layer comprising a polymer, wherein the polymer of each extrusion coating is selected from one or more of an ionomer, a COC, a CBC, an EVA, and a biopolymer; or
II) the first coating is an extrusion coating consisting of one single extruded layer comprising a polymer selected from one or more of a polyolefin, a PE, a PP, an LDPE, an HDPE, an ionomer, a COC, a CBC, an EVA, and a biopolymer, and the second coating is a coextrusion coating comprising or consisting of three coextrusion coated polymer layers x, y, and z, wherein x is positioned between the paper base sheet and y, y is positioned between x and z and comprises one or more of an EVOH or a PA, and each of x and z comprises a polymer selected from one or more of a polyolefin, a PE, a PP, an LDPE, an HDPE, a COC, and a CBC; or
III) the first coating and the second coating are coextrusion coatings, the first and the second coating each comprising or consisting of three coextrusion coated polymer layers x, y, and z, wherein for each of the first and second coatings x is positioned between the paper base sheet and y, y is positioned between x and z and comprises one or more of an EVOH or a PA, and each of x and z comprises a polymer selected from one or more of a polyolefin, a PE, a PP, an LDPE, an HDPE, a COC and a CBC; or
IV) the first coating is a dispersion coating comprising a PE, and the second coating is a coextrusion coating, wherein either:
a) the second coating consists of two coextrusion coated polymer layers r and s, r being positioned between the paper base sheet and s, r comprising one or more of a polyolefin, a PE, a PP, a PE, an LDPE, and an HDPE, and s comprising one or more of an HDPE and a COC; or
b) the second coating consists of three coextrusion coated polymer layers r, s, and t, s being positioned between r and t, r being positioned between the paper base sheet and s, each of r and t comprising one or more of a polyolefin, a PE, a PP, an LDPE, and an HDPE, and s comprising one or more of a polyolefin, a PE, a PP, a PE, an LDPE, an HDPE, and a COC; or
V) the first coating and the second coating are coextrusion coatings, wherein either:
a) the first and the second coating each consists of two coextrusion coated polymer layers r and s, r being positioned between the paper base sheet and s, r comprising one or more of a polyolefin, PE, a PP, or a PE, an LDPE, and an HDPE, and s comprising one or more of an HDPE and a COC; or
b) the first coating consists of two coextrusion coated polymer layers r and s, r being positioned between the paper base sheet and s, r comprising a PE, and s comprising one or more of a polyolefin, PE, a PP, a PE, an LDPE, an HDPE, and a COC, and the second coating consists of three coextrusion coated polymer layers r, s, and t, s being positioned between r and t, r being positioned between the paper base sheet and s, r and t comprising one or more of a polyolefin, PE, a PP, or a PE, an LDPE, and an HDPE, and s comprising one or more of an HDPE and a COC.

2. The packaging sheet according to option II) of claim 1, wherein x and z each comprises an LDPE, and wherein, in the second coating, one further polymer layer w is coextruded with x, y, and z, wherein z is positioned between y and w, and w comprises a polymer selected from one or more of a polyolefin, a PE, a PP, an LDPE, an HDPE, a COC, a CBC, a PS, a PET, and a PET-G.

3. The packaging sheet according to option III) of claim 1, wherein, in the second coating, x and z comprises an LDPE, and wherein, in the second coating, one further polymer layer w is coextruded with x, y, and z, wherein z is positioned between y and w, and w comprises a polymer selected from one or more of a polyolefin, a PE, a PP, an LDPE, an HDPE, a COC, a CBC, a PS, a PET, and a PET-G.

4. The packaging sheet according to option III) of claim 1, wherein x and z comprises an LDPE, and wherein, in each coating, one further polymer layer w is coextruded with x, y, and z, wherein z is positioned between y and w, and w for each coating comprises a polymer selected from one or more of a polyolefin, a PE, a PP, an LDPE, an HDPE, a COC, a CBC, a PS, a PET, and a PET-G.

5. The packaging sheet according to any one of claims 2 to 4, wherein the coating(s), comprising polymer layers z, x, y, and w each comprise(s) two further polymer layers u and v coextruded with z, x, y, and w, and positioned between y and w, wherein u comprises an EVOH, v is positioned between u and w and comprises one or more of a polyolefin, a PE, a PP, an LDPE, and an HDPE, each of x and z comprises one or more of a polyolefin, a PE, a PP, an LDPE, and an HDPE, and y comprises a PA.

6. The packaging sheet according to any one of the preceding claims, wherein each of the coextrusion coating(s) has a loading in the range of 5 to 40 g/m².

7. The packaging sheet according to any one of the previous claims, wherein the packaging sheet has a water vapor transmission rate of less than 20 g/m²/day according to ASTM standard F1249 at 38°C and 90% relative humidity.

8. The packaging sheet according to claim 7, wherein the packaging sheet has a water vapor transmission rate of less than 5 g/m²/day according to ASTM standard F1249 at 38°C and 90% relative humidity.

9. The packaging sheet according to any one of the preceding claims, wherein at least one of the first and second coatings has a seal initial temperature in the range of 65°C to 180°C.

10. The packaging sheet according to any one of the preceding claims, wherein an exposed contact surface of the packaging sheet has a static and/or dynamic coefficient of friction to itself in the range of 0.15 to 0.80.

11. The packaging sheet according to any one of the preceding claims, wherein a layer of an extrusion coating primer is positioned between at least one of the extrusion coated layer(s) and the paper sheet.

12. The packaging sheet according to any one of claims 1 to 11, wherein the paper base sheet comprises a metallization.

13. A packaging comprising either:
- a pharmaceutical or a product comprising tobacco packaged in the packaging sheet according to option I), II), or III) of claim 1 or according to any one of claims 2 to 12 as dependent from option I), II), or III) of claim 1; or
- a confectionary food packaged in the packaging sheet according to option IV) or V) of claim 1 or according to any one of claims 6 to 12 as dependent from option IV) or V) of claim 1.

14. A method for producing the packaging sheet according to any one of the preceding claims, the method comprising the step of extrusion coating the extrusion coating(s) on the paper base sheet.

15. Use of a packaging sheet, wherein either:
- the packaging sheet is according to option I), II), or III) of claim 1 or according to any one of claims 2 to 12 as dependent from option I), II), or III) of claim 1 and is used for packaging of a pharmaceutical or a product comprising tobacco; or
- the packaging sheet is according to option IV or V of claim 1 or according to any one of claims 6 to 12 as dependent from option IV) or V) of claim 1 and is used for packaging of a confectionary food.
